# EUROPÄISCHE PATENTSCHRIFT

(11) **EP 0 601 457 B1**
(45) Veröffentlichungstag und Bekanntmachung des Hinweises auf die Patenterteilung: **09.10.1996**
(21) Anmeldenummer: 93119352.8
(22) Anmeldetag: 01.12.1993
(51) Int. Cl.: C04B 35/00, C08K 3/00, C08F 297/02

(54) **Aufbereitungsmischung anorganischer Pulver mit polymeren Hilfsmitteln und ihre Verwendung**
Prepared mixture of inorganic powders with polymeric adjuvants and use
Mélange confectionné de poudres inorganiques avec des adjuvants polymériques ainsi que son utilisation

(30) Priorität: 05.12.1992 DE 4240979
(43) Veröffentlichungstag der Anmeldung: 15.06.1994
(73) Patentinhaber: HOECHST AKTIENGESELLSCHAFT, 65929 Frankfurt am Main (DE)
(72) Erfinder: Rudolph, Jürgen, D-55126 Mainz (DE); Meyer, Wolfgang, Dr., D-55129 Mainz (DE); Wegner, Gerhard, Prof. Dr., D-55127 Mainz (DE); Hessel, Friedrich, Dr., D-55124 Mainz (DE); Seitz, Katharina, Dr., D-60596 Frankfurt am Main (DE); Roosen, Andreas, Dr., D-65719 Hofheim (Taunus) (DE)

(56) Entgegenhaltungen:
- EP-A- 0 466 261
- GB-A- 2 005 697
- US-A- 4 032 628
- US-A- 5 219 945

## Beschreibung

Die Aufbereitung von anorganischen Pulvern mit organischen Hilfsstoffen basiert meistens auf empirischen Verfahren und oft auf der Verwendung von Naturstoffen, die eine gute Reproduzierbarkeit des Verfahrens beeinträchtigen. So werden z.B. oxydische Pulver mit Fischöl als Dispergator und Polyvinylbutyral als Binder zu keramischen Grünfolien vergossen, die anschließend zu Keramiken gebrannt werden. Die Reproduzierbarkeit dieses Verfahrens entspricht nicht den Anforderungen an einen Fertigungsprozeß mit engen Toleranzen, wie sie u.a. in der Mikroelektronik verlangt wird. Die unbefriedigende Reproduzierbarkeit des Verfahrens beruht beim Einsatz von Fischöl zumindest teilweise auf dessen ungenügender Lagerstabilität aufgrund seiner autooxydierenden Eigenschaften oder seiner Zersetzung unter Einwirkung von Mikrobenbefall.

Die in derartigen Verfahren z.Zt. eingesetzten Hilfsstoffe bedingen oft den Einsatz mehr oder weniger umweltbelastender Lösungsmittel. So werden im Zusammenhang mit Fischöl als Dispergator und Polyvinylbutyral als Binder bei der Aufbereitung von α-Al₂O₃-Pulvern Gemische aus Trichlorethylen und Ethanol eingesetzt. Insgesamt haben sich in der keramischen Verfahrenstechnik beim Foliengießprozeß keine Verfahren mit umweltfreundlichen wäßrigen Lösungen in größerem Umfang im Produktionsbereich etabliert.

Die in der Keramik eingesetzten Dispergatoren und Binder sind aufgrund empirischer Auswahl gefunden worden. In vielen Fällen handelt es sich bei den Dispergatoren um seifenähnliche niedermolekulare Substanzen (vgl. F. Aldinger, H. Kalz, Angew. Chem., 26, 371-381, 1987). Bei der Auswahl dieser Stoffe sind die spezifischen Wirkungseigenschaften von hydrophilen Haftgruppen und die Stabilisatorwirkung von hydrophoben Kohlenwasserstoffketten aufgrund empirischer Selektion zwar gegeben, nicht aber im Sinne von bester und reproduzierbarer Wirkung optimiert. Insbesondere wird bei den niedermolekularen Dispergatoren auf die multifunktionelle Wirkung von polymeren Haft- und Stabilisatorgruppen verzichtet.

Aufgabe der Erfindung war es daher, verbesserte Hilfsmittel für die Aufbereitung von anorganischem Pulver bereitzustellen, die nämlich insofern verbessert sind, als z. B. die Toleranzhaltigkeit von Bauteilen, die aus anorganischem Pulver plus den Hilfsmitteln als Additiv hergestellt werden, d.h. ihre Sinterschwundkonstanz, sich nach längerer Lagerzeit der Hilfsstoffe selbst, beziehungsweise der Teile im Grünzustand, zuverlässig aufrechterhalten läßt und als sich überhaupt eine erhöhte Prozeßstabilität erreichen läßt.

Gelöst wird diese Aufgabe,durch eine Aufbereitungsmischung anorganischer Pulver gemäß Anspruch 1.

Die anionische Polymerisation von Alkylmethacrylat und Tertiärbutylmethacrylat zu Blockcopolymeren sowie die polymeranaloge Verseifung der Tertiärbutylmethacrylatblöcke zu Methacrylsäureblöcken ist in der Literatur bereits beschrieben, siehe EP-A 298 667. Die oberflächenaktiven Eigenschaften der Zweiblockcopolymeren sind dort zwar erwähnt, Hinweise mit möglichen Anwendungen im Bereich der Pulveraufbereitung findet der Fachmann allerdings nicht.

Blockcopolymere mit einem geringen Methacrylsäureanteil werden von Billingham et al. über Gruppenübertragungsreaktionen dargestellt, und ihre außerordentliche Wirksamkeit als Dispergatoren für Aluminiumoxid beim Foliengießprozeß behauptet (N.C. Billingham, S.P. Rannard, J. Mykytiuk, S.P Armes and O. Hoad, "Macromolecules '92", University of Kent, Sept. 7-11, 1992). In ihrer Publikation verweisen die Autoren auf eine Veröffentlichung in Advanced Materials, 4, 73 (1992), in der allerdings nichts von entsprechenden Block-Copolymeren steht.

In der erfindungsgemäßen Aufbereitungsmischung werden die Blockcopolymeren in einer Menge von 0,5 bis 10 Gew.-% eingesetzt, vorzugsweise von 1 bis 7,5 Gew.-%, besonders bevorzugt von 2 bis 5 Gew.-%, bezogen auf das Gesamtgewicht der in der Gesamtmischung enthaltenen Feststoffe. Darüber hinaus kann gegebenenfalls auch noch Polyvinylbutyral oder andere Additive wie z.B. Weichmacher in einer Menge von 0 bis 8 Gew.-% zugesetzt werden, vorzugsweise von 0 bis 5 Gew.-%, ebenfalls bezogen auf das Gesamtgewicht der in der Gesamtmischung enthaltenen Feststoffe. Als anorganische Pulver eignen sich oxidische Materialien wie Aluminiumoxid, Titandioxid, Aluminiumtitanat, Zirkondioxid, piezokeramische Pulver, Siliziumdioxid oder Mischungen von diesen, aber auch nichtoxidische Materialien wie Aluminiumnitrid, Siliziumcarbid oder Siliziumnitrid oder ferroelektrische Pulver oder andere Oxide, Carbide, Nitride oder Boride.

Die Dispergierwirkung von organischen Hilfsmitteln basiert auf einer Adsorptionswirkung des Hilfsmittels auf der Anorganik, bei gleichzeitiger Lösungsvermittlung, also einer Wechselwirkung des Hilfsmittels mit dem umgebenden Medium. Die erfindungsgemäßen Blockcopolymeren aus Methacrylsäure (MAA/Block A 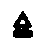 Haftblock) und Alkylmethacrylat (MMA/Block B 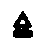 Stabilisatorblock) sind deshalb für den Einsatz als Dispergatoren von Vorteil, weil in ihnen die Funktion der Adsorption an die anorganische Oberfläche im Block A, und die Funktion der Wechselwirkung mit dem umgebenden Flüssigmedium mit Block B unabhängig voneinander optimiert werden kann. Im Gegensatz zu niedermolekularen Seifen bieten die erfindungsgemäßen Blockcopolymeren überraschenderweise den Vorteil, aufgrund ihres polymeren Charakters eine Vielfachwirkung sowohl bezüglich der Adsorption auf Basis der A-Blöcke als auch bezüglich der Lösungsvermittlung auf Basis der B-Blöcke aufzuweisen. Die Synthese der erfindungsgemäßen Blockcopolymeren erfolgte über anionische Polymerisation von Tertiärbutylmethacrylat (TBMA) und Alkylmethacrylat (MMA) zu entsprechenden Precursor-Blockcopolymeren (Poly-TBMA-block-MMA), aus denen durch Verseifung des TBMA-Blocks die gewünschten Blockcopolymeren (Poly-MAA-block-MMA) erhalten wurden. Um die Wirksamkeit dieser polymeren Hilfsstoffe zu optimieren, sind diese systematisch sowohl bezüglich ihrer Blocklängen als auch bezüglich ihres Gesamtpolymerisationsgrades variiert worden. Voraussetzung für die angestrebte Optimierung ist die exakte Kontrolle der Synthese mit dem Ziel einer sehr engen Verteilung des Polymerisationsgrades innerhalb beider Blöcke des Copolymeren.

Die Dispergatorwirkung der erfindungsgemäßen Blockcopolymeren wurde mittels eines Sedimentationstests unter standardisierten Bedingungen untersucht. Als Ergebnis des Sedimentationstests erhält man die Sedimentationsdichte in % der theoretischen Dichte der Anorganik, hier: α-Al₂O₃.

Überraschend ergab sich nicht nur eine deutliche Abhängigkeit der Wirksamkeit der Hilfsmittel von ihrer chemischen Struktur, sondern auch ein enges Strukturfenster mit unerwartet überragender Wirksamkeit, was insbesondere in Beispiel 2 verdeutlicht wird. Die beste Dispergierbarkeit wird bei solchen Proben gefunden, bei denen der Gesamtpolymerisationsgrad niedrig, d.h. etwa im Bereich von 50 bis 120, und bei denen gleichzeitig die Länge der A-Blöcke kurz ist. Als Ergebnis der Sedimentationstests ist die Dispergatorwirkung der erfindungsgemäßen Block-Copolymeren mindestens ebensogut wie die von löslichem Fischöl.

Das Adsorptionsverfahren der erfindungsgemäßen Blockcopolymeren basiert auf spezifischen Wechselwirkungen zwischen den Carboxylgruppen der MAA-Blöcke mit den OH-Gruppen oder anderen polaren Gruppen der Pulveroberfläche. Im Adsorptionstest findet man folgerichtig bereits bei Dispergatorkonzentrationen von etwa 10 mg/ml in der dem Pulver angebotenen Lösung eine deutliche Belegung der Pulveroberfläche, wie sich aus Beispiel 3 ergibt.

Die Beständigkeit gegenüber Autoxydation bei Lagerung ist bei den erfindungsgemäßen Blockcopolymeren unvergleichlich besser als bei Fischöl, und auch die reproduzierbar hohe Qualität aufgrund des Syntheseverfahrens ist deutlich günstiger als die des natürlichen Qualitätsschwankungen unterliegenden Fischöls, was in Beispiel 4 näher veranschaulicht wird.

Die Nutzbarkeit der erfindungsgemäßen Blockcopolymeren als Dispergatoren für α-Al₂O₃ wurde im Foliengießprozeß selbst unter Beweis gestellt : Dabei wurden die Blockcopolymeren einmal als Fischölersatz in einem vom Verfahren her üblichen Ansatz mit Polyvinylbutyral als Binder eingesetzt, womit qualitativ gute Grünfolien erhalten wurden. In einer anderen Versuchsreihe wurden die Blockcopolymeren als Dispergator und Binder, also ohne Zusatz von Polyvinylbutyral oder anderen Hilfsmitteln eingesetzt, und zu Grünfolien vergossen. Die erhaltenen Grünfolien waren in ihrer Qualität mit denen vergleichbar, die mit Binderzusatz hergestellt wurden. Es muß betont werden, daß damit die multifunktionelle Nutzbarkeit dieser Spezialpolymeren nachgewiesen wurde, und damit eine Vereinfachung des Foliengießprozesses möglich wird, was Beispiel 6 deutlich zeigt.

### Referen-Beispiel 1: Synthese von Poly(MAA-block-MMA)

Die Darstellung der Block-Copolymeren erfolgte durch anionische Polymerisation von Tertiärbutylmethacrylat (TBMA) und Methylmethacrylat (MMA) in THF bei -60 bis -80°C. Für die anionische Polymerisation wurde eine spezielle Vollglasapparatur aufgebaut, die sowohl die Reinigung der Komponenten, ihre Zusammenführung als auch die eigentliche Synthese unter Vakuum- bzw. lnertgasbedingungen erlaubt. Die Apparatur wurde sorgfältig durch mehrere Zyklen von Heizen/Kühlen und Evakuieren/Inertgasspülen von Feuchtigkeit und Sauerstoff befreit. Die Monomeren wurden von Stabilisatoren befreit und sorgfältig gereinigt, u.a. durch Umsetzung mit Triethylaluminium, um Alkoholreste, die sonst als Abbruchreagens wirken würden, abzufangen.

Die eigentliche Polymerisation erfolgte mit einem Diphenylhexyllithium-Katalysator (DPHLi), der zuvor aus Diphenylethylen (DPHE) und n-Butyllithium (n-BuLi) jeweils frisch hergestellt worden war. Als Zusatz zu diesem Katalysator wurde ein 5-molarer Überschuß an Lithiumchlorid als Regler eingesetzt. LiCl reduziert aufgrund verschiedener Komplexierungs-und Assoziierungsgleichgewichte mit den Monomeren nicht nur die Reaktionsgeschwindigkeit der Polymerisation, sondern bewirkt auch eine erhebliche Verschmälerung der Molekulargewichtsverteilung. Damit wird eine genaue Einstellung der Blocklängen erst möglich. Die Synthese erfolgte durch Vorlage des Katalysators und Reglers in THF, Aufbau des Poly-TBMA-Blocks und anschließender Anpolymerisation des Poly-MMA-Blocks. Ein typischer Ansatz (für A 18, vgl. Tab. 1) lautet :

500 ml THF, 30ml DPHLi, 128 mg LiCl, 5,0g TBMA und 2,5g MMA.

Das erste Monomer konnte ca. eine Stunde abreagieren, bevor das zweite Monomer hinzugefügt wurde. Der Abbruch der Polymerisation erfolgte durch Ausfällen des Copolymeren in Alkohol.

In einer ersten Synthesereihe wurden Copolymere hergestellt, die im wesentlichen gleichlange TBMA- und MMA-Blöcke aufweisen, deren Gesamtmolekulargewicht jedoch zwischen 8.000 und 140.000 variiert. Die genauen Angaben sind in der nachfolgenden Tabelle 1 im einzelnen zusammengestellt :

**Tabelle 1:**

| Proben-Nr. | TBMA/MMA (¹H-NMR) | Mₙ (GPC) | M_{w}/Mₙ (GPC) | Pₙ (GPC) |
|---|---|---|---|---|
| A 20 | 1,1 | 4.405 | 1,18 | 48 |
| A 43 | 0,95 | 7.682 | 1,08 | 83 |
| A 19 | 2,0 | 8.300 | 1,12 | 53 |
| A 17 | 1,2 | 14.000 | 1,10 | 90 |
| A 25 | 1,4 | 17.500 | 1,04 | 112 |
| A 18 | 1,4 | 20.000 | 1,09 | 127 |
| A 16 | 1,3 | 30.000 | 1,06 | 191 |
| A 12 | 1,0 | 40.000 | 1,04 | 255 |
| A 11 | 1,0 | 60.000 | 1,07 | 382 |
| A 13 | 1,8 | 140.000 | 1,08 | 892 |
| TBMA/MMA gibt das Verhältnis der Kettenlängen der einzelnen Blöcke an, | | | | |
| Mₙ bedeutet das mittlere Molekulargewicht der Blockcopolymeren ausgedrückt als Zahlenmittel, | | | | |
| M_{w}/Mₙ ist ein Maß für die Einzelabweichungen der Molekulargewichte vom gefundenen Mittelwert, | | | | |
| Pₙ ist der mittlere Polymerisationsgrad (Zahlenmittel). | | | | |

Die Poly-TBMA-Blöcke wurden anschließend durch eine Behandlung mit HCI/Dioxan (25/75 Vol.-Teile) verseift und in Polymethacrylsäureblöcke überführt. Die Hydrolyse wurde mittels Infrarot- und ¹H-NMR-Spektroskopie kontrolliert, sie erfolgte vollständig.

### Beispiel 2: Wechselwirkung mit Aluminiumoxid; Sedimentationsverhalten

Die Wirksamkeit der Block-Copolymeren als Dispergatoren für Aluminiumoxid mit Tri/Eth als Medium wurde in einem Standard-Sedimentationstest getestet. Vergleichsweise wurden sowohl die unverseiften Proben Nr. A 11 bis A 43 als auch die verseiften Proben Nr. B 1 bis B 43 eingesetzt. Das Ergebnis ist in Tabelle 2 zusammengefaßt.

**Tabelle 2:**

| Proben-Nr. | . Pₙ | SDH (%) | Proben-Nr. | Pₙ | SDH (%) |
|---|---|---|---|---|---|
| A 20 | 48 | ---*) | B 20 * | 48 | 52 |
| A 43 | 83 | ---*) | B 43 * | 48 | 50 |
| A 17 | 90 | 35 | B 17 * | 90 | 47 |
| A 25 | 112 | 35 | B 25 * | 112 | 41 |
| A 18 | 127 | 35 | B 18 * | 127 | 40 |
| A 16 | 191 | 35 | B 16 | 191 | 32 |
| A 12 | 255 | 35 | B 12 | 255 | 30 |
| A 11 | 382 | 35 | B 11 | 382 | 30 |
| A 13 | 892 | 35 | B 13 | 892 | 30 |

| | | | | | |
|---|---|---|---|---|---|
| ○ *) nicht bestimmt; | | | | | |
| erfindungsgemäße Proben | | | | | |

○ (Serie A vor Verseifung, Serie B nach Verseifung);

○ SDH bedeutet Sedimentationsdichte (%) bezogen auf die theoretische Dichte der Keramik. Die SDH-Werte wurden bestimmt, indem jeweils die Dichte des Pulversediments volumetrisch ermittelt wurde.

Wie zu erwarten, weisen die unverseiften Block-Copolymeren nur eine sehr geringe Wirksamkeit als Dispergatoren auf, die erzielte Sedimentationsdichte liegt mit 35% nur knapp über der Wirksamkeit des Tri/Eth-Gemisches (31 %). Überraschend ist aber, daß das Sedimentationsverhalten nicht vom Polymerisationsgrad der Proben abhängt.

Die verseiften Proben mit Polymethacrylsäureblöcken als Haftgruppen weisen eine Dispergatorwirkung auf, die mit abnehmendem Polymerisationsgrad zunimmt und die Wirksamkeit von Fischöl (42 %) deutlich übertrifft.

### Referenz-Beispiel 3: Adsorptionsverhalten

Zur Charakterisierung der Wechselwirkung der verseiften Blockcopolymeren mit Aluminiumoxid wurden die Polymerproben einem Standard-Adsorptionstest unterzogen, und die Adsorptionsisothermen bestimmt. Eine typische Messung ist in Tabelle 3 dargestellt, bei der die Probe B 13 eingesetzt wurde. Man erkennt, daß das Blockcopolymer schon bei sehr niedrigen Konzentrationen vergleichsweise stark adsorbiert wird, was auf eine spezifische Wechselwirkung zwischen den als Haftgruppen dienenden Polymethacrylsäureblöcken und der Al₂O₃-Oberfläche hindeutet.

**Tabelle 3:**

| Ausgangskonzentration [mg/ml]*) | Restkonzentration [mg/ml]**) | adsorbierte Menge [mg/m²]***) |
|---|---|---|
| 10 | 0,2 | 0,96 |
| 20 | 0,3 | 1,44 |
| 40 | 16 | 2,35 |
| 80 | 53 | 2,64 |

| | | |
|---|---|---|
| *) Konzentration des Dispergators in der angebotenen Lösung; | | |
| **) Restkonzentration nach Adsorption in der überstehenden Lösung; | | |
| ***) Adsorbierte Menge auf Dispergator auf Al₂O₃. | | |

Bereits ab relativ niedrigen Gleichgewichtskonzentrationen tritt eine Sättigung der anorganischen Oberfläche auf.

### Beispiel 4: Reproduzierbarkeit/chemische Beständigkeit

Die Synthese der Block-Copolymeren ist sowohl bezüglich der Gesamtmolekulargewichte als auch bezüglich der Längen der Blöcke A bzw. B beliebig gut reproduzierbar (besser als 1 % Abweichung) und hängt lediglich von der Sorgfalt beim Präparieren ab. Damit stehen diese Spezialpolymeren in beliebiger Menge und zu jedem beliebigen Zeitpunkt zur Verfügung.

Die chemische Beständigkeit und insbesondere die Lagerfähigkeit ist der von Fischöl bei weitem überlegen: Während Fischöl nach einer ein- bis zweitägigen Lagerung an Luft bei Raumtemperatur bereits nicht mehr verwendbar ist, können die Polymeren beliebig lange unter diesen Bedingungen gelagert werden, ohne an Wirksamkeit zu verlieren. Dies wurde durch den Vergleich des Sedimentationsverhaltens von frisch hergestellten Polymeren mit dem von Polymeren nach achtwöchiger Lagerung als Pulver an Luft bei Raumtemperatur bestätigt.

### Beispiel 5: Grünfolien ohne Zusatz von anderen Hilfsstoffen

Es wurden 425 mg der Polymerprobe B 25 in 2,8 g Tri/Eth durch Rühren bei Raumtemperatur gelöst und 3 g α-Al₂O₃-Pulver zugegeben. Diese Mischung wurde 15 Minuten im Ultraschall und über Nacht mit der Rüttelbank behandelt, bevor sie unter Normalbedingungen zu Folien gegossen wurde. Ohne jeden sonstigen Zusatz von anderen organischen Hilfsstoffen wurden Grünfolien ausgezeichneter Qualität erhalten.

## Patentansprüche

1. Aufbereitungsmischung anorganischer Pulver enthaltend anorganisches Pulver, Dispergator und Binder, dadurch gekennzeichnet, daß als Dispergator und/oder Binder ein verseiftes Blockcopolymeres aus den Einheiten Methacrylsäure (A) und Alkylmethacrylat (B), bei dem der Alkylrest 1 bis 8 C-Atome umfassen kann, verwendet wird, wobei das Blockcopolymere vor der Verseifung insgesamt ein mittleres Molekulargewicht von 4405 bis 20000 aufweist, jeweils ausgedruckt als Zahlenmittel (Mₙ) und wobei das Kettenlängenverhältnis der Blöcke B:A innerhalb der in der Aufbereitungsmischung enthaltenen Blockcopolymeren zueinander im Bereich von 0,95 bis 2,0 liegt.

2. Aufbereitungsmischung anorganischer Pulver nach Anspruch 1, dadurch gekennzeichnet, daß sie das Blockcopolymere in einer Menge von 0,5 bis 10 Gew.-%, vorzugsweise von 1 bis 7,5 Gew.-%, besonders bevorzugt von 2 bis 5 Gew.-% enthält, bezogen auf das Gesamtgewicht der in der Gesamtmischung enthaltenen Feststoffe.

3. Aufbereitungsmischung anorganischer Pulver nach einem der Ansprüche 1 bis 2, dadurch gekennzeichnet, daß sie zusätzlich gegebenenfalls auch noch Polyvinylbutyral und/oder andere Additive wie Weichmacher in einer Menge von 0 bis 8 Gew.-% enthält, vorzugsweise von 0 bis 5 Gew.-%, bezogen auf das Gesamtgewicht der in der Gesamtmischung enthaltenen Feststoffe.

4. Keramische Aufbereitungsmischung nach einem der Ansprüche 1 bis 3, dadurch gekennzeichnet, daß sie als anorganisches Pulver Aluminiumoxid, Aluminiumnitrid oder Aluminiumtitanat enthält.

5. Verwendung einer keramischen Aufbereitungsmischung nach Anspruch 4 zur Herstellung von keramischen Gießmassen.

6. Verwendung einer keramischen Gießmasse hergestellt nach Anspruch 5 zur Herstellung von keramischen Grünfolien.

## Claims

1. An inorganic powder composition comprising inorganic powder, dispersant and binder, wherein the dispersant and/or binder used is a saponified block copolymer of the units methacrylic acid (A) and alkyl methacrylate (B) in which the alkyl radical can comprise from 1 to 8 carbon atoms, the total block copolymer prior to saponification having an average molecular weight of from 4405 to 20,000, in each case expressed as number average (Mₙ), and the chain-length ratio of the blocks B:A to one another within the block copolymers contained in the composition being in the range of from 0.95 to 2.0.

2. An inorganic powder composition as claimed in claim 1, which contains the block copolymer in an amount of from 0.5 to 10 % by weight, preferably from 1 to 7.5 % by weight, particularly preferably from 2 to 5 % by weight, based on the total weight of solids contained in the total mixture.

3. An inorganic powder composition as claimed in claim 1 or 2, which may additionally contain poly(vinyl butyral) and/or other additives such as plasticizers in an amount of from 0 to 8 % by weight, preferably from 0 to 5 % by weight, based on the total weight of solids contained in the total mixture.

4. A ceramic composition as claimed in any one of claims 1 to 3, wherein the inorganic powder present is aluminum oxide, alumina nitride or aluminum titanate.

5. A method of using a ceramic composition as claimed in claim 4 for the production of ceramic casting slips.

6. A method of using a ceramic casting slip produced as claimed in claim 5 for the production of green ceramic sheets.

## Revendications

1. Mélange de préparation de poudres inorganiques contenant une poudre inorganique, un agent de dispersion et un liant, caractérisé en ce que l'on utilise, comme agent de dispersion et/ou comme liant, un copolymère séquencé saponifié obtenu à partir de motifs d'acide méthacrylique (A) et de méthacrylate d'alkyle (B), dans lequel le groupe alkyle peut contenir 1 à 8 atomes de carbone, le copolymère séquencé présentant avant la saponification globalement un poids moléculaire moyen de 4 405 à 20 000, exprimé toujours en moyenne en nombre (Mₙ), le rapport entre la longueur de chaînes des séquences B : A étant compris entre 0,95 à 2,0 dans les copolymères séquencés contenus dans le mélange de préparation.

2. Mélange de préparation de poudres inorganiques selon la revendication 1, caractérisé en ce que celui-ci contient le copolymère séquencé en une quantité de 0,5 à 10 % en poids, de préférence de 1 à 7,5 % en poids, d'une manière particulièrement préférée de 2 à 5 % en poids, rapportée au poids total des solides contenus dans la totalité du mélange.

3. Mélange de préparation de poudres inorganiques selon l'une quelconque des revendications 1 à 2, caractérisé en ce que celui-ci contient de plus, le cas échéant, du polyvinylbutyral et/ou d'autres additifs tels que des agents plastifiants en une quantité de 0 à 8 % en poids, de préférence de 0 à 5 % en poids, par rapport au poids total des solides contenus dans la totalité mélange.

4. Mélange de préparation de céramique selon l'une quelconque des revendications 1 à 3, caractérisé en ce que celui-ci contient, comme poudres inorganiques, de l'oxyde d'aluminium, du nitrure d'aluminium ou du titanate d'aluminium.

5. Utilisation d'un mélange de préparation de céramique selon la revendication 4 pour la production d'une masse à couler céramique.

6. Utilisation d'une masse à couler céramique préparée selon la revendication 5, pour la production de feuilles à vert en céramique.
